Europäisches Patentamt

European Patent Office

Office européen des brevets

(19)

(11) EP 0 335 474 B2

(12) NEW EUROPEAN PATENT SPECIFICATION

(45) Date of publication and mention
of the opposition decision:
01.09.1999 Bulletin 1999/35

(45) Mention of the grant of the patent:
18.05.1994 Bulletin 1994/20

(21) Application number: 89201143.8

(22) Date of filing: 26.02.1987

(51) Int Cl.6: **G01B 7/00**, G01B 7/28

(54) **Metrological apparatus**

Metrologische Vorrichtung

Appareil métrologique

(84) Designated Contracting States:
CH DE GB IT LI SE

(30) Priority: 04.03.1986 GB 8605324

(43) Date of publication of application:
04.10.1989 Bulletin 1989/40

(62) Document number(s) of the earlier application(s) in
accordance with Art. 76 EPC:
87301712.3 / 0 240 151

(73) Proprietor: **TAYLOR HOBSON LIMITED**
**Leicester LE4 9JQ (GB)**

(72) Inventors:
• **Lane, Hugh Rogers**
**South Croxton Leicester, LE7 8RT (GB)**
• **Onyon, Peter Dean**
**Loughborough Leicestershire LE11 2BQ (GB)**

(74) Representative:
**Beresford, Keith Denis Lewis et al**
**BERESFORD & Co.**
**2-5 Warwick Court**
**High Holborn**
**London WC1R 5DJ (GB)**

(56) References cited:
WO-A-83/03467          DE-A- 1 905 909
DE-A- 2 654 839        FR-A- 2 282 618
GB-A- 2 037 436        US-A- 3 509 635
US-A- 3 678 584        US-A- 4 299 370

## Description

This invention relates to a metrological apparatus having a computer means and drive means controlled thereby for performing measuring operations on a workpiece by effecting relative movement between the workpiece and a stylus which contacts and traverses the surface of the workpiece and is deflectable transversely of its own longitudinal axis to actuate a transducer which carries the stylus and provides varying measurement signals in accordance with said deflection thereof during said relative movement, said apparatus further including a base, a turntable for supporting the workpiece and mounted on said base for rotation about a vertical axis, a vertical column mounted on said base adjacent said turntable, a carriage mounted on said column for vertical movement, and an arm mounted on said carriage for horizontal movement, said arm carrying the transducer so that the tip of the stylus may be moved towards and away from the axis of rotation of the turntable by horizontal movement of the arm relative to the carriage, and the transducer being positionable selectively with the stylus in a vertical orientation and in a horizontal orientation.

Such an apparatus is already known as manufactured and sold by the applicants under the trade name "Talycenta" (Trade Mark). This known apparatus suffers from the problem that when the orientation of the transducer is changed between the positions in which the stylus is horizontal and vertical, the position of the tip of the stylus changes and recalculation of the position of the tip is necessary.

With a view to solving this problem, the invention is characterised in that the transducer is mounted at one end of a further arm which is rigid and whose other end is attached to the horizontally movable arm for rotation about an axis which is angled at substantially 45° to the vertical, the stylus, the further arm and the 45° axis being such that the further arm is rotatable through 180° about the 45° axis between a first position in which the stylus is in said vertical orientation and its tip is located at a position at a lower level than the horizontally movable arm and a second position in which the stylus is in said horizontal orientation and its tip remains substantially in the same position, said further arm and said horizontally movable arm being the only arms between the transducer and the carriage.

In a preferred embodiment, said transducer is arranged for sensing deflection of said stylus in a single plane relative to said transducer and said transducer is rotatable relative to the horizontally movable arm generally about the longitudinal axis of the stylus to adjust the orientation of said single plane relative to a workpiece on said first support means.

It is further preferred that said computer means is operable to control said movement of said horizontally movable arm in response to signals derived from said transducer such that said stylus may, during a measuring operation, follow features of said workpiece surface outside the range of operation of the transducer and stylus. In this way, a transducer and stylus having extremely high resolution, such as a resolution of better than 20 nanometres, preferably 12 nanometres, but a small range of operation, such as less than 0.4mm, can be employed to enable the sensing of the minutest variations in form, whilst large features of form can be accommodated by the actuation of the drive means under control of the digital computer, and the derivation of the metrological data is both in dependence upon the transducer output and in dependence upon the movement of the sensor. The position of the sensor should therefore be determinable also with high resolution although in practice it is not necessary that this resolution be so high as that provided by the sensor itself. Thus, for example, whilst as already indicated the sensor should preferably have a resolution to better than 20 nanometres the resolution to which the position of the sensor may be determined when moved by the second drive means might only be to better than say 500 nanometres, preferably to say 200 nanometres but even this is an improvement of at least an order of magnitude compared to prior art apparatus.

The size of the features which can be accommodated by movement of the sensor will depend upon the range of movement of the sensor. In practice, the sensor may be movable at least 100 mm in the radial direction and at least 100 mm in the axial direction. In a preferred specific example, the sensor is movable radially through a distance of 200 mm and axially through a distance of 500 mm.

The invention is described further by way of example with reference to the accompanying drawings in which:

Figure 1 is a perspective view of metrological apparatus according to an embodiment of the invention;
Figure 2 is a perspective view showing part of the apparatus of Figure 1 in more detail;
Figure 3 is an elevation in the direction of arrow III of Figure 2;
Figure 4 is an elevation in the direction of arrow IV of Figure 2;
Figure 5 is a block diagram illustrating a computer sysem incorporated in the apparatus of Figure 1;
Figure 6 is a diagram of a cam for illustrating a preferred function which may be carried out by the apparatus of Figures 1 to 5; and
Figures 7, 8 and 9 are diagrams illustrating methods of measuring flatness, cylindricity and conicity utilising the apparatus of Figures 1 to 5.

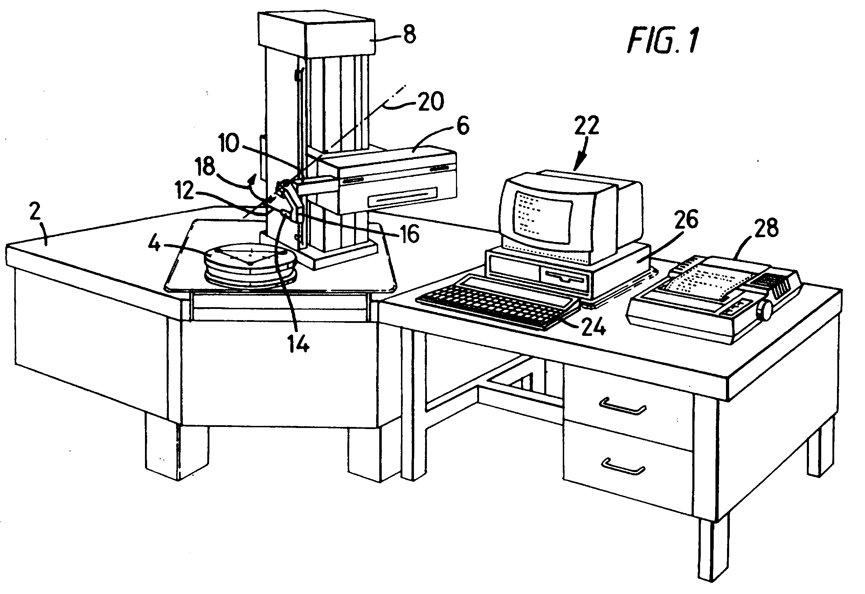

With reference to Figure 1, metrological apparatus comprises a bench 2 provided with a turntable 4 for supporting a workpiece (not shown). A carriage 6 is supported for vertical movement on a column 8 and carries a horizontally movable arm 10. A stylus 12 for engaging the surface of the workpiece is comprised in a linear transducer 14, which may be inductive or capacitative for example, which is carried on one end of an arm 16 whose other end is attached to the free end of the arm 10 pivotal movement, in the direction shown by arrow 18, about an axis 20 which is at 45° to the horizontal.

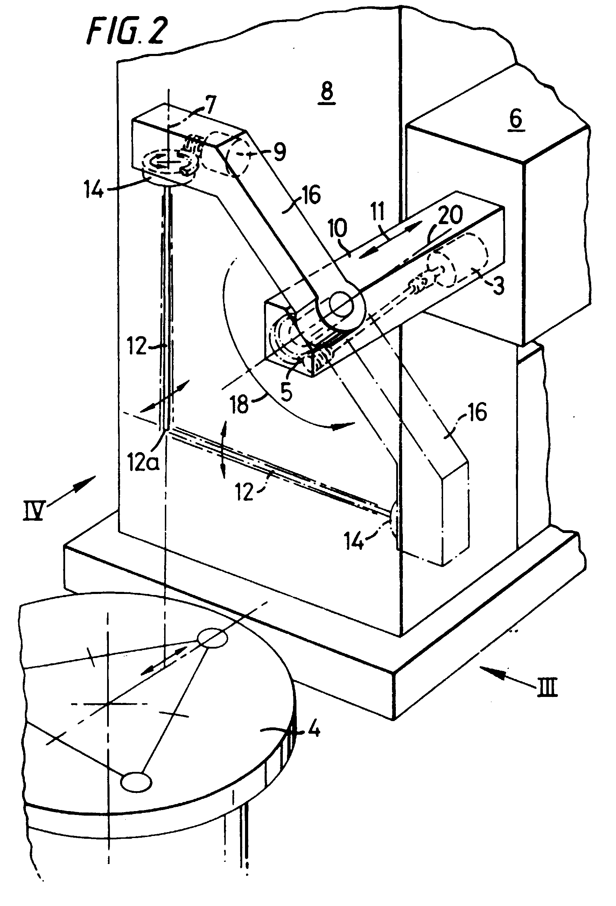

As best seen in Figure 2, the arm 16 is pivotable through 180° about the axis 20 between the end positions shown in Figure 2 in full and chain dotted lines respectively. In the full line position, the stylus 12 is vertical and in the broken line position the stylus 12 is horizontal. The arrangement is such that the tip of the stylus 12a is located in substantially the same position in a radial plane of the turntable 4 when the arm 16 is in either of the two positions shown in Figure 2. An electric motor 3 mounted in the arm 10 is coupled to the arm 16 through a worm and wheel transmission 5 for driving the arm 16 between its two end positions. The stylus 12 and transducer 14 are arranged so that the stylus 12 can be deflected relative to the transducer 14 in only one direction. However, the transducer 14 is mounted in the arm 16 for rotation about an axis 7, preferably through 270° in 30° steps. Thus, for example, if the transducer 14 is rotated about axis 7 through 90° this changes by 90° the plane within which the stylus 12 is deflectable. A motor 9 is mounted in the arm for effecting rotation of the transducer 14. When the arm 16 is in the full line position shown in Figure 2 with the stylus 12 vertical, for example for sensing an internal surface of a workpiece placed on the turntable 4, the transducer 14 will generally be maintained in a position in which the stylus 12 is deflectable in a radial plane relative to the turntable 4. However, when the arm 16 is in the broken line position shown in Figure 2 with the stylus 12 horizontal, the transducer 14 may be rotated either to the position in which the stylus 12 is deflectable in a horizontal plane or to a position in which the stylus 12 is deflectable in a vertical plane. In the former position, a side surface of a workpiece may conveniently be sensed and in the latter position an upwardly facing surface may conveniently be sensed. Surfaces facing in other directions may be sensed by rotating the transducer 14 about axis 7 to a position in which the stylus 12 is deflectable in a plane generally normal to the surface to be sensed.

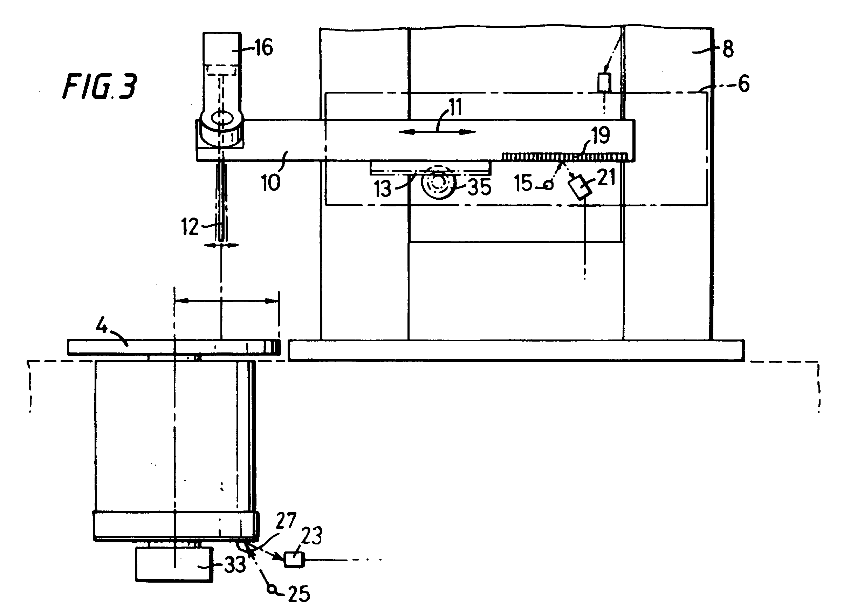

As seen in Figure 3, a motor 35 is provided in the carriage 6 for driving the arm 10 in the horizontal direction indicated by arrow 11, drive being transmitted from the motor 35 to the arm 11 through a rack and pinion arrangement 13 or other suitable means such as a ball screw. Movement of the arm 10 in the direction of arrow 11 causes the transducer 14 to be moved horizontally so that the tip 12a of the stylus 12 is moved radially inwardly or outwardly relative to the axis of the turntable 4, the tip 12a remaining in the radial plane throughout this movement. Light from a source 15 mounted in the carriage 6 is directed towards a linear optical grating 19 carried by the arm 11 and reflected therefrom to a phototransducer 21 which provides output signals, preferably quadrature signals, from which the position and velocity of the arm 11 can be derived. As also seen in Figure 3, a further phototransducer 23 provides signals from which the position and rotational velocity of the turntable 4, which is driven by a motor 33, can be derived with the aid of a light source 25 and optical grating 27 movable with the turntable 4.

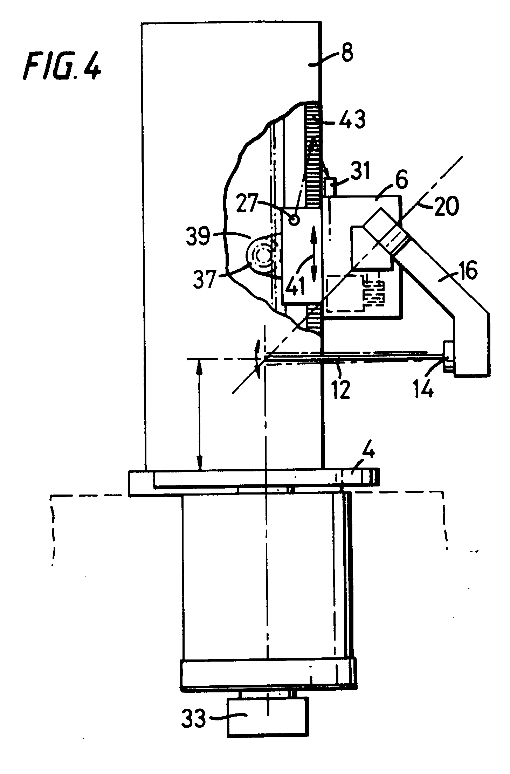

As seen in Figure 4, a motor 37 carried by the carriage 6 cooperates with a rack and pinion arrangement 39 (or other suitable means such as a sprocket wheel and chain) for driving the carriage 6 vertically in the direction of arrow 41. A constant force spring (not shown) is provided for counterbalancing this movement. A further optical grating 43 mounted in the column 8 reflects light from a source 27 carried by the carriage 6 to a phototransducer 31 also carried by the carriage 6 so that the transducer 31 may provide signals, preferably quadrature signals, from which the position and speed of movement of the carriage 6 may be derived.

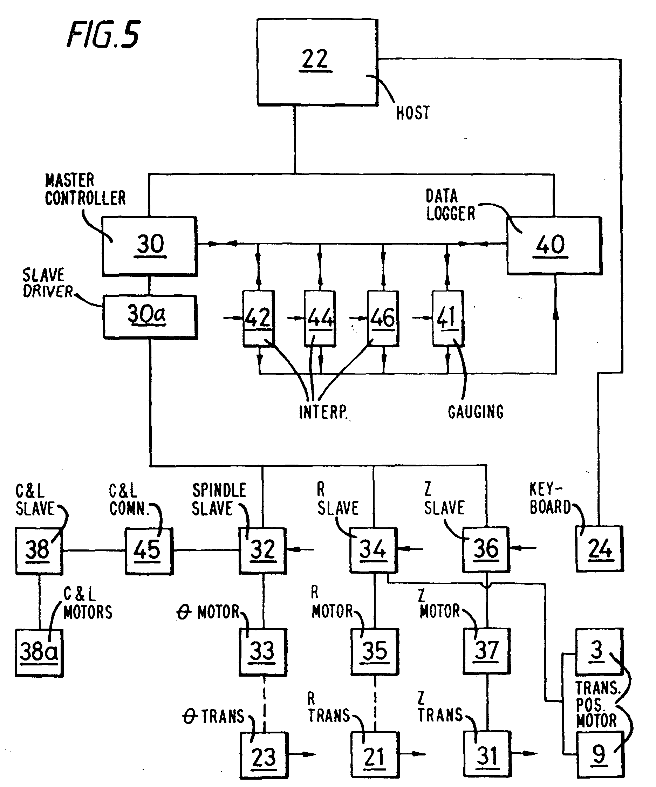

As seen in Figures 1 and 5 a host computer 22, which is provided with a keyboard 24, disc drive 26 and printer 28, is located on the bench 2 and is used for controlling the metrological apparatus, processing the measurements obtained and outputting the required metrological data. The host computer may, for example, be an IBM compatible PC.

As shown in Figure 5, the apparatus includes a number of microprocessors 30, 32, 34, 36, 38 and 40. Microprocessor 30 is used as a master controller and receives instructions from the host 22 as to the operations which are to be performed by the apparatus. Such instructions are stored by the master controller 30 which, in accordance with programs stored in memory associated with the master controller, instructs and controls the remaining microprocessors, via a slave driver processor 30a, as to the action to be taken in order to carry out the instructions supplied by the host 22. Each of the remaining microprocessors also has memory associated with it storing the routines necessary for the performance of the instructions received from the master controller 30. Thus, microprocessors 32, 34, 36 and 38 are designated as slaves.

Slave 32 controls the speed of rotation of the turntable 4. Slave 34 controls radial movement of the arm 10. Slave 36 controls vertical movement of the carriage 6. Slaves 32, 34 and 36 all preferably control the speeds of the respective motors 33, 35 and 37 in accordance with the teachings of out copending Patent Applications identifed as follows:

| Country | Application No |
|---|---|
| United Kingdom | 8530577 |
| China | 86107433 |
| Denmark | 5531/86 |
| Europe | 86309681.4 |

(continued)

| Country | Application No |
|---------|---------------|
| East Germany | P/297 385/4 |
| India | 892/MAS/86 |
| Japan | Not yet known |
| USA | 940506 |
| USSR | 4028602.24 |

Slave 38 receives instructions from communication network 45 and controls centring and levelling motors 38a wherein the turntable 4 is displaced horizontally and/or pivotally for centring and levelling of a workpiece prior to performing measurements. The arrangements for centring and levelling are preferably in accordance with the disclosure of our patent application being filed simultaneously herewith and claiming priority from British Patent Application Nos. 8605325 and 8624396 in which the inventors are Anthony Bruce Barnaby and Michael Walter Mills.

Microprocessor 40 receives data from gauging circuit 41 which receives and digitizes the signal output by the transducer 14 and from each of three interpolators 42, 44 and 46, which respectively receive signals from photoelectric transducers 23, 21 and 31 that detect the rotary movement of the turntable 4, the radial (horizontal) movement of the arm 10 and the vertical movement of the carriage 6 respectively. The interpolators function to provide data representing the precise positions of the turntable 4, arm 10 and carriage 6 to a resolution to a small fraction of the pitch of the optical gratings 27, 19 and 43. In the preferred embodiment, the interpolators provide resoiution of the position of the transducer 14 in the radial (horizontal) direction to about 200 nanometres and in the axial (vertical) direction to about 500 nanometres and the rotational position of the workpiece can be resolved to about 3 arc seconds. The invention is not restricted to any specific resolution but it is preferred that resolution in the radial and vertical directions should be better than 1 micron and the rotational resolution should be better than 100 arc seconds, preferably better than 10 arc seconds. As already indicated, the transducer 14 preferably provides an output signal which resolves the position of the tip 12a of the stylus 12 to better than 20 nanometres, preferably 12 nanometres. Thus, high resolution data as to the deflection of the stylus 12 and the disposition of the transducer 14 in the radial (R) and vertical (Z) directions and the precise rotational position (O) of the turntable 4 is continually supplied to the microprocessor 40 during a measuring operation. This data is logged and stored by the microprocessor 40 and supplied to the host 22 for the performance of the required calculations of this data in accordance with programs stored in memory associated with the host 22.

Accordingly, and by way of summary, the architecture shown in Figure 5 is such that the computers are arranged in three levels. The host 22 represents a firt level and permits the input of instructions from an operator, the transfer of appropriate instructions to the master controller, and the reception of data from the data logger 40. The host 22 performs calculations on that data in order to provide the required information. The second level is represented by the master controller 30 which, upon receipt of instructions from the host 22, transmits, in accordance with programs stored in memory associated with the master controller 30, appropriate instructions to the various slaves, via the slave driver 30a as necessary to perform the operation instructed by the host. The slaves 32, 34, 36 and 38, and the data logger 40, represent the third level and carry out, in accordance with programs stored in memory associated with them respectively, the detailed functions necessary to perform the operations instructed by the master controller on the instructions of the host 22. Preferably the master controller is arranged so that successive instructions received from the host 22 may be stored simultaneously in different portions of the associated memory so that these instructions may be acted upon in turn by the master controller 30.

It has already been mentioned that the transducer 14 is a linear transducer. Thus, the signal which it outputs is representative of the degree of deflection of the stylus 12. However, as also already indicated, transducers providing the required high degree of resolution, for example resolution to better than 20 nanometres suffer from the problem that their range of operation i.e. the range of movement of the tip 12a of the stylus 12 within which a linear output signal with the required resolution is provided, is highly limited. Specifically, transducers with a suitable resolution may have a range of no more than 0.4 mm. To overcome this problem in accordance with an important preferred aspect of the invention, the master controller 30, upon receiving information that the signal from the gauging circuit 41 has exceeded a predetermined threshold, transmits an instruction to slave 34 to activate the motor 35 whereby the arm 11 is displaced until the signal output by the gauging circuit 41 is returned to a predetermined value, defined as a null value (which may, for example, be zero). Such instruction is sent when the transducer 14 is in a position in which the stylus 12 is deflectable in a radial plane with the arm 16 in either of the positions shown in Figure 2. If the arm 16 is in the broken line position shown in Figure 2, with the stylus 12 horizontal, and if the transducer 14 is rotated to the position in which the stylus is deflectable in a vertical plane (i.e. parallel to the axis of the turntable 4) the master controller 30 sends an instruction to the slave 36 to activate the motor 37 when the output from the gauging circuit 14 exceeds the predetermined threshold. Further, the master controller 30 is arranged so that, in appropriate circumstances, activation of the motor 33 for rotating the turntable may be effected under control of signals from the transducer 14 such that when the signal therefrom exceeds a predetermined threshold the motor 33 is actuated so that the workpiece is moved as necessary to permit the transducer 14 to follow the surface of the workpiece as it moves in the horizontal and/or vertical direction. Thus, in all of these cases, the stylus 12 is caused to follow the surface of the workpiece during rotation of the workpiece on the turntable 4. As a result high resolution measurements can be obtained while nevertheless accommodating large features of form since when such large features are encountered by the stylus the arm 10 or carriage 6 is moved as appropriate so that the tip of the stylus follows the workpiece surface without the stylus being deflected beyond its range of operation. The host computer 22 obtains the metrological information required, for example as to form or errors in form, both from the signals derived from the transducer 14 and the signals derived from the phototransducers 23, 21, 31 and the associated interpolators 42, 44 and 46.

Alternatively or in addition, the speed at which the stylus traverses the workpiece surface may be varied, by varying the speed of the motors driving the turntable 4 and/or the arm 10 and/or the carriage 6, so as to enable the gathering of data in a preferred manner for example to provide constant surface bandwidth whereby the results of measuring identical surface features at different radii are also identical and dependent only on the surface speed selected. In particular, it is preferred that data be taken at points on the surface of the workpiece at fixed distances apart and accordingly, with the arrangement under description, this may be achieved regardless of, for example, different curvatures of different portions of the surface, without varying the data collection rate by varying one or more of the speeds mentioned in order to compensate for the difference in curvatures, for example. In order to accomplish this, the master controller 30 reads positional data from the interpolators 42, 44 and 46 and the gauging circuit 41, the speed of the appropriate motors being varied in accordance with this received data and with programs stored in memory associated with the master controller 30.

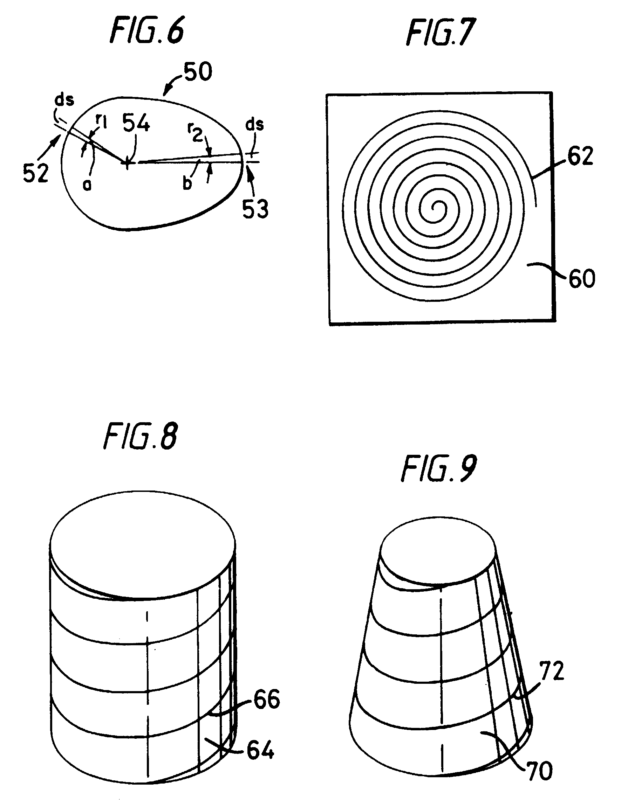

As an example of the foregoing, Figure 6 illustrates a cam 50 whose profile is to be measured by taking measurements at positions spaced apart by a distance ds. At portion 52 of the cam where distance ds is at a radius r1 from the centre of rotation 54 and subtends at angle a, the speed of rotation of the turntable 4, in order to enable collection of data at a constant rate, will have to differ from that utilised when measuring portion 53 of the cam, where ds is at a radius r2 and subtends an angle b. Thus, the master controller has associated with it programs for varying the speed of rotation of the turntable 4 taking these parameters into account in order that data may be collected at a constant rate at constant incremental positions of the stylus on the surface being measured. To achieve this, the speed of rotation of the turntable may be controlled in accordance with the following equation:

$$\frac{d\theta}{dt} = \frac{1}{R} \sqrt{V^2 - \left(\frac{dS}{dt} + \frac{dR}{dt}\right)^2}$$

where V is the required constant speed of traverse of the transducer over the workpiece surface, S is the signal from the linear output transducer 14 and R is the signal derived by the interpolator 44 from the transducer 21 indicating the radial position of the transducer 14.

With reference to Figure 7, a preferred operation for the measurement of flatness is illustrated. In Figure 7, a surface 60 of a workpiece (not shown) placed upon the turntable 4 is traversed by the stylus 12 in a spiral path 62. This is achieved by causing the arm 10 to be moved radially inwardly or outwardly accordingly to whether the measurement is started near the centre or near the periphery of the surface 60, whilst rotating the turntable 4. In one preferred mode of operation, the speed of rotation of the turntable is varied, as a linear function of the distance of the stylus from the centre of rotation, in order that the linear speed of traverse of the stylus over the surface is maintained constant. Data from the stylus 12 is logged at fixed time or distance intervals. Other modes of operation are possible in which, for example, the speed of rotation is kept constant.

With reference to Figure 8, cylindricity of a surface 64 is measured by causing the stylus 12 to traverse a spiral (helical) path 66. This is achieved, after centring and levelling, by rotation of the turntable 4 whilst moving the carriage 6 vertically. In this measurement, the speeds of movement are maintained constant and again data is logged at fixed time intervals, these fixed intervals again resulting in the logging of data at fixed incremental distances along the path of movement of a stylus over the surface. Measurements are taken over a number of revolutions around the surface 64 i.e. the helix or spiral has multiple turn. It may be noted that the stylus may be caused to traverse a spiral or helical path over the cylindrical surface 64 for the purpose of determining the axis of the cylinder.

In the example of Figure 9, conicity of a surface 70 is measured by causing the stylus 12 to traverse a spiral path 72 having several turns. This is achieved, after centring and levelling, by rotating the turntable 4 whilst moving the carriage 6 vertically and the arm 10 radially (horizontally). The radial movement is inwards if the stylus moves from a relatively wide portion to a relatively narrow portions of the surface 70 and <u>vice versa</u>. The radial movement of the arm 10 is controlled in dependence upon the magnitude of the signal output by the transducer 14 so that the stylus 12 is maintained in continuous contact with the conical surface 70 as the measurement progresses. Further, the angular velocity of the turntable 4 can be controlled as a linear function of the radial position of the arm 10 as indicated by transducer 44 so that the linear speed at which the stylus traverses the surface 70 is maintained constant. Data is logged at constant time intervals.

Although certain preferred methods of measurement have described, it should be understood that the machine may be programmed for carrying out a wide variety of measurements, such as surface roughness, roundness, straightness, flatness, squareness, taper, coaxiality, parallelism, size of regular and irregular shapes.

Where, in the preferred embodiment, the transducer position and/or the speeds of one or more of the motors are varied either in sequence or simultaneously so that the transducer follows the profile being measured and/or so that measurements may be taken at constant surface intervals measurements may be performed more rapidly and efficiently than in prior art apparatus.

## Claims

1. Metrological apparatus having a computer means (22,30,32,34 and 36) and drive means (33,35,37) controlled thereby for performing measuring operations on a workpiece by effecting relative movement between the workpiece and a stylus (12) which contacts and traverses the surface of the workpiece and is deflectable transversely of its own longitudinal axis to actuate a transducer (14) which carries the stylus and provides varying measurement signals in accordance with said deflection thereof during said relative movement, said apparatus further including a base (2), a turntable (4) for supporting the workpiece and mounted on said base for rotation about a vertical axis, a vertical column (8) mounted on said base adjacent said turntable (4), a carriage (6) mounted on said column (8) for vertical movement, and an arm (10) mounted on said carriage (6) for horizontal movement, said arm (10) carrying the transducer (14) so that the tip of the stylus (12) may be moved towards and away from the axis of rotation of the turntable (4) by horizontal movement of the arm (10) relative to the carriage (6), and the transducer (14) being positionable selectively with the stylus in a vertical orientation and in a horizontal orientation,

characterised in that the transducer (14) is mounted at one end of a further arm (16) which is rigid and whose other end is attached to the horizontally movable arm (10) for rotation about an axis (20) which is angled at substantially 45° to the vertical, the stylus (12), the further arm (16) and the 45° axis (20) being such that the further arm (16) is rotatable through 180° about the 45° axis (20) between a first position in which the stylus (12) is in said vertical orientation and its tip is located at a position at a lower level than the horizontally movable arm (10) and a second position in which the stylus (12) is in said horizontal orientation and its tip remains substantially in the same position, said further arm (16) and said horizontally movable arm (10) being the only arms between the transducer (14) and the carriage (6).

2. Apparatus according to claim 1, wherein said transducer (14) is arranged for sensing deflection of said stylus (12) in a single plane relative to said transducer (14) and wherein said transducer (14) is rotatable relative to the horizontally movable arm (10) generally about the longitudinal axis of the stylus (12) to adjust the orientation of said single plane relative to a workpiece on said first support means (4).

3. Apparatus according to claim 1 or 2, characterised in that said computer means (22,30,40) is operable to control said movement of said horizontally movable arm (10) in response to signals derived from said transducer (14) such that said stylus may, during a measuring operation, follow features of said workpiece surface outside the range of operation of the transducer (14) and stylus (12).

## Patentansprüche

1. Metrologische Vorrichtung mit einer Computereinrichtung (22, 30, 32, 34 und 36) und einem von dieser gesteuerten Antrieb (33, 35, 37) zum Durchführen von Meßvorgängen an einem Werkstück unter Ausführung einer Relativbewegung zwischen dem Werkstück und einem Stift (12), der die Werkstückoberfläche berührt und überquert und quer zu seiner Längsachse auslenkbar ist, um einen Wandler (14) zu betätigen, der den Stift trägt und während der Relativbewegung entsprechend der Auslenkung sich ändernde Meßsignale liefert, wobei die Vorrichtung einen Sockel (2), einen daran um eine vertikale Achse drehbar gelagerten Drehtisch (4) zur Aufnahme des Werkstücks, eine neben dem Drehtisch (4) an dem Sockel montierte vertikale Säule (8), einen an dieser vertikal bewegbar gelagerten Schlitten (6) und einen an dem Schlitten (6) horizontal bewegbar gelagerten Arm (10) aufweist, wobei der Arm (10) den Wandler (14) derart trägt, daß der Wandler (14) durch horizontale Bewegung des Arms (10) relativ zu dem Schlitten (6) auf die Drehachse des Drehtisches (4) zu und von ihr weg bewegt werden kann und wahlweise so positionierbar ist, daß der Stift vertikal oder horizontal orientiert ist,

dadurch **gekennzeichnet**, daß der Wandler (14) an einem Ende eines weiteren Arms (14) angebracht ist, der starr ist und mit seinem anderen Ende an dem horizontal bewegbaren Arm (10) um eine um im wesentlichen 45° zur Vertikalen geneigten Drehachse (20) drehbar gelagert ist, wobei der Stift (12), der weitere Arm (16) und die um 45°-Achse (20) derart vorgesehen sind, daß der weitere Arm (16) um die 45°-Achse (20) um 180 Grad zwischen einer ersten Stellung, in der der Stift (12) vertikal orientiert ist und seine Spitze sich in einer tieferen Position befindet als der horizontal bewegbare Arm (10), und einer zweiten Stellung drehbar ist, in der der Stift (12) horizontal orientiert ist und seine Spitze im wesentlichen in der gleichen Position verbleibt, und wobei der weitere Arm (16) und der horizontal bewegbare Arm (10) die einzigen Arme zwischen dem Wandler (14) und dem Schlitten (6) sind.

2. Vorrichtung nach Anspruch 1, wobei der Wandler (14) zur Erfassung der Auslenkung des Stifts (12) in einer einzigen Ebene relativ zu dem Wandler (14) ausgebildet und relativ zu dem horizontal bewegbaren Arm (10) generell um die Längsachse des Stiftes (12) drehbar ist, um die Orientierung der einzigen Ebene relativ zu einem Werkstück auf der ersten Halteeinrichtung (4) zu justieren.

3. Vorrichtung nach Anspruch 1 oder 2, dadurch gekennzeichnet, daß die Computereinrichtung (22, 30, 40) so betätigbar ist, daß sie die Bewegung des horizontal bewegbaren Arms (10) entsprechend von dem Wandler (14) abgenommenen Signalen derart steuert, daß der Stift während eines Meßvorgangs Merkmalen der Werkstückoberfläche außerhalb des Betriebsbereichs von Wandler (14) und Stift (12) folgen kann.

**Revendications**

1. Appareil métrologique comportant des moyens d'ordinateur (22, 30, 32, 34 et 36) et des moyens d'entraînement (33, 35, 37) commandés par les moyens d'ordinateur pour effectuer des opérations de mesure sur une pièce d'oeuvre en produisant un mouvement relatif entre la pièce d'oeuvre et une pointe de lecture (12) qui vient en contact et passe sur la surface de la pièce d'oeuvre en pouvant être déviée transversalement par rapport à son propre axe longitudinal pour actionner un transducteur (14) portant la pointe de lecture, et qui fournit des signaux de mesure variables suivant sa déviation pendant le mouvement relatif, l'appareil comprenant en outre un socle (2), un plateau tournant (4) destiné à supporter la pièce d'oeuvre et se montant sur la base pour tourner autour d'un axe vertical, une colonne verticale (8) montée sur le socle au voisinage du plateau tournant (4), un chariot (6) monté sur la colonne (8) pour effectuer un mouvement vertical, et un bras (10) monté sur le chariot (6) pour effectuer un mouvement horizontal, le bras (10) portant le transducteur (14) de façon que le bout de la pointe de lecture (12) puisse être rapproché et écarté de l'axe de rotation du plateau tournant (4) par un mouvement horizontal du bras (10) par rapport au chariot (6), et le transducteur (14) pouvant être positionné sélectivement avec la pointe de lecture dans une orientation verticale et dans une orientation horizontale,
caractérisé en ce que
le transducteur (14) est monté à une extrémité d'un autre bras (16) rigide et dont l'autre extrémité est fixée au bras mobile horizontalement (10) pour tourner autour d'un axe (20) formant un angle essentiellement à 45° par rapport à la verticale, la pointe de lecture (12), l'autre bras (16) et l'axe à 45° (20) étant tels que l'autre bras (16) puisse tourner d'un angle de 180° autour de l'axe à 45° (20) entre une première position dans laquelle la pointe de lecture (12) se trouve dans l'orientation verticale tandis que son bout est placé dans une position située à un niveau inférieur à celui du bras mobile horizontalement (10), et une seconde position dans laquelle la pointe de lecture (12) se trouve dans l'orientation horizontale tandis que son bout reste essentiellement dans la même position, l'autre bras (16) et le bras mobile horizontalement (10) étant les seuls bras compris entre le transducteur (14) et le chariot (6).

2. Appareil selon la revendication 1,
dans lequel
le transducteur (14) est conçu pour détecter une déviation de la pointe de lecture (12) dans un seul plan par rapport au transducteur (14), et en ce que ce transducteur (14) peut tourner par rapport au bras mobile horizontalement (10), d'une façon générale autour de l'axe longitudinal de la pointe de lecture (12), pour régler l'orientation de ce plan unique par rapport à une pièce d'oeuvre placée sur le premier moyen de support (4).

3. Appareil selon la revendication 1 ou 2,
caractérisé en ce que
les moyens d'ordinateur (22, 30, 40) peuvent fonctionner pour commander le mouvement du bras mobile horizontalement (10) en réponse à des signaux provenant du transducteur (14), de façon que la pointe de lecture puisse, pendant une opération de mesure, suivre les caractéristiques de la surface de la pièce d'oeuvre à l'extérieur de la plage de fonctionnement du transducteur (14) et de la pointe de lecture (12).

FIG.1

FIG.2

FIG.3

FIG. 4

EP 0 335 474 B2

# FIG.5

FIG.6

FIG.7

FIG.8

FIG.9